# EUROPÄISCHE PATENTSCHRIFT

(11) **EP 2 024 644 B1**
(45) Veröffentlichungstag und Bekanntmachung des Hinweises auf die Patenterteilung: **31.03.2010**
(21) Anmeldenummer: 07728662.3
(22) Anmeldetag: 30.04.2007
(51) Int. Cl.: F04D 29/44, F01D 5/14, F01D 9/04, F02C 6/12, F02C 3/08

(54) **DIFFUSOR**
DIFFUSER
DIFFUSEUR

(30) Priorität: 26.05.2006 EP 06405234
(43) Veröffentlichungstag der Anmeldung: 18.02.2009
(73) Patentinhaber: ABB Turbo Systems AG, 5400 Baden (CH)
(72) Erfinder: KÜHNEL, Janpeter, 8180 Bülach (CH); FELD, Heinz-Jürgen, 5524 Niederwil (CH); LINDBLOM, Christine, 2415 Nussbaumen (CH)
(74) Vertreter: ABB Patent Attorneys
(86) Internationale Anmeldenummer: PCT/EP2007/054208
(87) Internationale Veröffentlichungsnummer: WO 2007/137924

(56) Entgegenhaltungen:
- EP-A2- 0 305 879
- WO-A-2005/035993
- US-A- 5 178 516

## Beschreibung

### Technisches Gebiet

Die Erfindung bezieht sich auf das Gebiet der Verdichter von Abgasturboladern für aufgeladene Brennkraftmaschinen. Sie betrifft eine Leitvorrichtung für den Diffusor am Verdichterradaustritt eines Radialverdichters sowie einen Verdichter mit einer solchen Leitvorrichtung.

### Stand der Technik

In modernen Abgasturboladern werden zur Erhöhung des Ansaugdrucks von Brennkraftmaschinen in der Regel einstufige Radialverdichter mit beschaufelten Diffusoren am Verdichterradaustritt eingesetzt. Die Diffusoren weisen eine Leitvorrichtung mit Leitschaufeln mit prismatischen, in der Regel aerodynamisch geformten Profilen auf. Die Abströmung des Verdichterrades ist im wesentlichen durch eine sogenannte Jet-Wake-Strömung geprägt, bei der sich radial impulsarme Strömung an der Seite des Eintrittsgehäuses (Shroud-Seite) sammelt, während auf der Nabenseite eine gesunde Strömung anliegt. Somit fällt die radiale Geschwindigkeitskomponente der Strömung über die Höhe des Diffursorkanals ab.

Bei der Auslegung von Verdichterstufen muss stets ein Kompromiss zwischen der aerodynamischen Performance, der mechanischen Auslastung und der akustischen Lärmbildung durch den Verdichter gefunden werden. Verdichterstufen mit hohen spezifischen Schluckvermögen haben lange Laufschaufeln, deren Schwingeigenformen bei vergleichsweise niedrigen Frequenzen auftreten und sich leicht anregen und in Schwingung versetzen lassen. Eine Hauptquelle dieser Anregungen ist ein durch die Leitschaufeln der Leitvorrichtung des Diffusors erzeugtes, ungleichförmiges Druckpotenzialfeld. Erfahrungsgemäss erzeugen Verdichterstufen mit hohen spezifischen Schluckvermögen auch hohe Lärmpegel am Verdichteraustritt, welche im wesentlichen durch das Auftreffen der zeitlichen Strömungsschwankungen auf die Leitschaufeln der Leitvorrichtung des Diffusors verursacht werden.

Ein Punkt stetiger Untersuchungen zu Verbesserung der Stufe besteht darin, die Radialverdichter so auszulegen, dass die Pumpgrenze zu möglichst kleinen Durchflüssen verschoben wird, ohne dabei Wirkungsgradeinbussen in Kauf nehmen zu müssen. Sind die Kennfelder schmal, so müssen für die Anpassung an verschiedene Anwendung zahlreiche Spezifikationen mit verschiedenen Schaufelhöhen und/ oder Diffusoren vorgehalten werden, was zu hohen Lagerkosten führt.

Zur Reduktion der Schaufelschwingungen können die Laufschaufeln des Verdichterrades verdickt werden oder aber der Abstand der Leitvorrichtung des Diffusors zum Verdichterradaustritt vergrössert werden, um die Anregungen zu reduzieren. Die Vergrösserung des Abstands der Leitvorrichtung des Diffusors führt gleichzeitig zu einer Reduktion des Lärms. Beide Massnahmen führen jedoch zu einer Reduktion des Wirkungsgrades, weswegen die gewünschte thermodynamische Performance verfehlt werden dürfte.

Um der oben beschriebenen Strömungsschichtung zu entsprechen, können meridional geneigte Leitschaufeln in der Leitvorrichtung der Diffusoren eingesetzt werden. Dadurch wird erreicht, dass die Fehlanströmung an den Leitschaufeleintrittskanten minimiert wird und somit ein besserer Wirkungsgrad erreicht wird. Zusätzlich bewirken die meridional geneigten Leitschaufeln eine Reduktion der Schwingungsanregung der Laufschaufeln und eine reduzierte Austrittslärmerzeugung durch Laufrad-/Leitradinteraktion. Beim Einsatz von meridional geneigten Leitschaufeln in der Leitvorrichtung der Diffusoren können bei hohen Schluckvermögen die strengen akustischen Anforderungen unter Umständen nicht erfüllt werden. Die Fertigung von Diffusoren mit meridional geneigten Leitschaufeln ist zudem deutlich aufwendiger als die von prismatischen Schaufeln. Statt in einem Fräsgang eine Schaufel fräsen zu können, muss das Profil über der Höhe in mehreren Arbeitsgängen abgezeilt werden.

Aus US 5,178,516 ist eine gattungsgemäße Leitvorrichtung am Verdichterradaustritt von Radialverdichtern bekannt, bei welcher zur Verbesserung der strömungstechnischen Eigenschaften die Eintrittskanten der Leitschaufeln eintrittsseitig näher am Verdichterradaustritt liegen als nabenseitig. Mit der eintrittsseitigen Verlängerung der Leitschaufel soll erreicht werden, dass es unmittelbar radial ausserhalb des Verdichterradaustritts lokal zu keinen Rezirkulationsströmen kommt. Dabei wird explizit vorgegeben, dass der maximale Abstand der Schaufeleintrittskante eintrittsseitig weniger als 10 vom Hundert des Aussenradius der Verdichterlaufschaufeln betragen darf. Die zurückversetzte Eintrittskante nabenseitig ist entsprechend mehr als 10 vom Hundert des Aussenradius der Verdichterlaufschaufeln von dem Verdichterradaustritt beabstandet. Die Höhe der verlängerten Schaufelspitze wird mit 10 bis 60 vom Hundert der Höhe des Diffusorkanals vorgegeben.

Aus US 5,529,457 ist aus einer ähnlichen Anordnung bekannt, dass zur einfacheren Herstellung die unterschiedlichen Eintrittskanten der Leitschaufeln durch eine Stufe realisiert werden können.

Mit der in diesen beiden Schriften vorgeschlagenen Verlängerung der Leitschaufelspitzen wird eine Vergrösserung des Betriebsbereichs der Verdichter angestrebt. Massnahmen zur Lärmreduktion spielen in den Ausführungen keine Rolle. Aufgrund der Reduktion des Abstands der Eintrittskanten der Leitschaufeln vom Verdichterradaustritt dürfte mit der vorgeschlagenen Abstufung der Eintrittskante der Leitschaufel der Lärm am Verdichteraustritt sowie die Anregung der Schaufelschwingungen jedoch eher zunehmen.

### Kurze Darstellung der Erfindung

Die Aufgabe der vorliegenden Erfindung besteht darin, lärmreduzierende Massnahmen für einen Verdichter mit hohem Schluckvermögen zu schaffen.

Erfindungsgemäss wird dies mit einer Leitvorrichtung für den Diffusor am Verdichterradaustritt eines Radialverdichters erreicht, bei welcher die Leitschaufeln meridional gestufte Eintrittskanten aufweisen, wobei die Stufe durch Zurückversetzen der nabenseitigen Eintrittskante realisiert wird. Diese meridionale Stufung teilt die Leitschaufeln in zwei Teilschaufeln, von denen eine erste Teilschaufel länger ausgebildet ist als die zweite Teilschaufel.

Die Zurückversetzung der Eintrittskante der nabenseitigen Teilschaufel und die damit einhergehende Überlagerung der Schallfelder, die an den vorderen und hinteren Eintrittskanten der Leitschaufeln des Diffusors erzeugt werden, führt zu einer zusätzlichen Verbesserung der an sich schon günstigen akustischen Eigenschaften der Diffusoren mit meridional geneigten Leitschaufeln.

Mit dem gestuften Diffusor kann eine grössere nutzbare Kennfeldbreite bei gleichem Wirkungsgrad und niedrigerem Austrittlärm als beim meridional geneigten Diffusor erreicht werden.

Die thermodynamische Performance wird durch den Diffusor mit meridional gestuften Leitschaufeln ebenfalls verbessert. Während die radial impulsarme Strömung auf der Eintrittsseite durch den langen Teil des Profils so geführt wird, dass die Strömung die gewünschte Richtung annimmt, wird auf der Hubseite für die gesunde Strömung (reich an Radialimpulsen) ein sehr kurzer Diffusor mit grossem engsten Querschnitt verwendet. Von Diffusoren mit kurzen Leitschaufeln ohne meridionale Neigung oder Stufung ist bekannt, dass sie die Stabilität der Verdichterstufe verbessern und gute Wirkungsgrade erreichen, da die von der Strömung benetzte Fläche klein ist und damit geringe Reibungsverluste entstehen. Die verbesserte Stabilität der Strömung führt zu breiteren Kennfeldern. Damit kann mit einer Spezifikation eine grössere Bandbreite von Motorbetriebslinien, die sich im Schluckverhalten unterscheiden, abgedeckt werden. Dadurch wird die Anzahl der benötigten Spezifikation minimiert und so die Lagerhaltungskosten reduziert.

Zudem ergeben sich gegenüber den meridional geneigten Leitschaufeln bei den gestuft ausgebildeten Leitschaufeln mit unterschiedlich langen Teilschaufeln Vorteile bei der Herstellung. Dabei wird vorteilhafterweise zunächst das Leitschaufelprofil wie ein prismatisches Profil gefertigt und anschliessend aus dem nabenseitigen Teil auf konstanter Höhe ein kleineres, ebenfalls prismatisches Profil nachgearbeitet. Dadurch reduziert sich der Fertigungsaufwand gegenüber einem meridional geneigten Diffusor deutlich.

Weitere Vorteile ergeben sich aus den abhängigen Ansprüchen.

### Kurze Beschreibung der Zeichnungen

Folgend ist anhand der Zeichnungen Ausführungsformen der erfindungsgemässen Leitvorrichtung beschrieben. Hierbei zeigt
- Fig. 1: einen Schnitt durch einen Diffusor am Austritt des Laufrades eines Radialverdichters mit einer ersten Ausführungsform der erfindungsgemässen Leitvorrichtung mit verkürzten Teilleitschaufeln,
- Fig. 2: einen Schnitt durch einen Diffusor am Austritt eines Radialverdichters mit einer zweiten Ausführungsform der erfindungsgemässen Leitvorrichtung,
- Fig. 3: ein Kurvendiagram mit der Lärmentwicklung in Abhängigkeit des Verhältnisses zwischen den Abständen der Eintrittskanten der Teilleitschaufeln von der Austrittskante der Laufschaufeln des Verdichterrades für unterschiedliche Höhen der Teilleitschaufeln, und
- Fig. 4: eine drei dimensionale Darstellung der verschiedenen Kurvenverläufe des Diagrams nach Fig. 3.

### Weg zur Ausführung der Erfindung

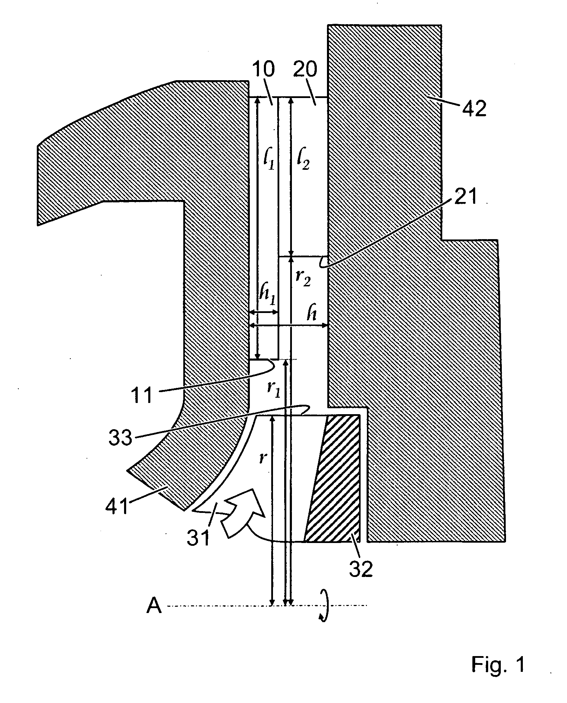

In einem in der Fig. 1 nur teilweise dargestellten Verdichtergehäuse ist ein Verdichterrad um eine Achse A drehbar angeordnet. Das Verdichtergehäuse ist schematisch zusammengesetzt aus einem eintrittsseitigen Gehäuseteil 41 und einem nabenseitigen Gehäuseteil 42. Das Verdichterrad sitzt auf einer Welle, welche bei einem Abgasturbolader durch eine nicht dargestellte Turbine angetrieben wird. Das Verdichterrad umfasst die Nabe 32 sowie, auf der Nabe angeordnet, eine Vielzahl von Laufschaufeln 31. Sie reichen vom anströmseitigen Ende des Verdichterrades bis zum abströmseitigen Ende am radialen Aussenrand des Verdichterrades. Die Strömungsrichtung ist mit dem dicken Pfeil angedeutet.

In Strömungsrichtung weiter stromabwärts des abströmseitige Endes des Verdichterrades ist ein Diffusor angeordnet. Der Diffusor setzt sich aus Diffusorwänden und einer Leitvorrichtung mit mehreren, entlang des Umfangs verteilt angeordneten Leitschaufeln zusammen. Die Diffusorwände begrenzen den Strömungskanal stromabwärts des Verdichterrades.

Erfindungsgemäss setzen sich die Leitschaufeln der Leitvorrichtung aus mehreren Teilschaufeln zusammen. In einer ersten Ausführungsform sind dies zwei Teilschaufeln 10 und 20. Die erste Teilschaufel 10 liegt an der eintrittsseitigen Gehäusewand an und erstreckt sich ins Innere des Diffusorkanals. Die Eintrittskante 11 der ersten Teilschaufel liegt auf einem Radius r₁, welcher vorteilhafterweise rund 110 bis 125 vom Hundert des Aussenradius r der Abströmkanten 33 der Laufschaufeln 31 des Verdichterrades misst. Ein zu kleiner Abstand kann zu Schwingungsproblemen führen, während ein zu grosser Abstand den Wirkungsgrad beeinträchtigt.

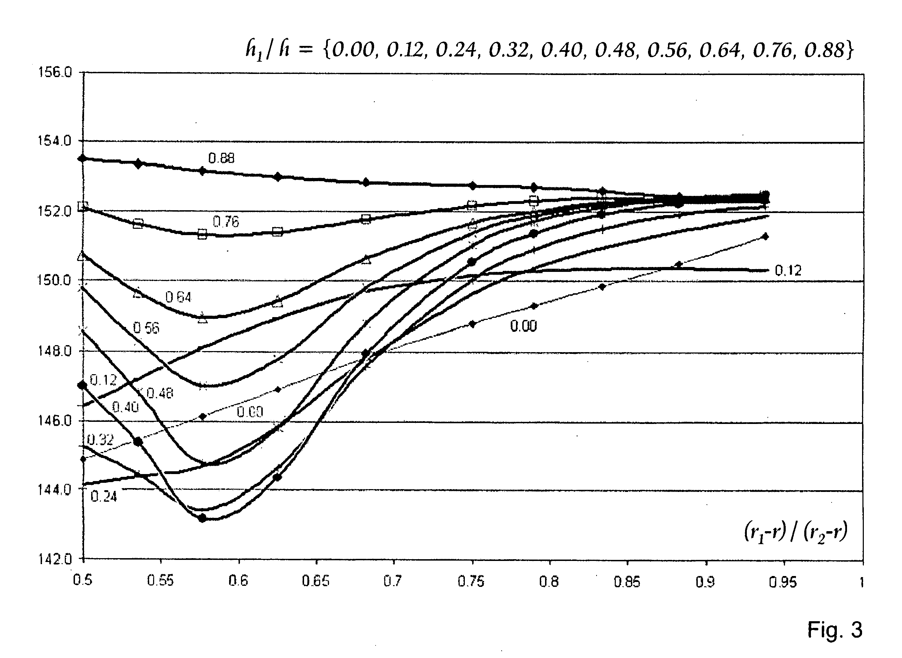

Die Eintrittskante 21 der zweiten Teilschaufel ist gegenüber der Eintrittskante der ersten Teilschaufel meridional zurückversetzt. Zur Erfindung führende Überlegungen und darauf basierende Lärmberechnungen haben ergeben, dass sich die Schaufelprofillänge I₂ der zweiten Teilschaufel 20 bezüglich der Schaufelprofillänge I₁ der ersten Teilschaufel 10, beziehungsweise das Verhältnis der Abstände der Eintrittskanten der Teilschaufeln vom Aussenradius der Abströmkanten der Laufschaufeln (r₂-r)/(r₁-r), in Abhängigkeit des Verhältnisses der Höhen der Teilschaufeln optimieren lässt. Das Diagramm in Fig. 3 zeigt den Lärmverlauf für verschiedene Konfiguration der gestuften Leitschaufeln. Jede Kurve zeigt dabei jeweils den Lärmverlauf für das angegebene Verhältnis der Höhe der ersten Teilschaufel zur Summe der Höhen aller Teilschaufeln h₁ / h in Abhängigkeit des Verhältnisses der Abstände der Eintrittskanten der Teilschaufeln vom Aussenradius der Abströmkanten der Laufschaufeln (r₁-r)/(r₂-r).

Die Berechnungen haben ergeben, dass bei einer Höhe der ersten Teilschaufel h₁ von rund 30 bis 70 vom Hundert der Summe der Höhen aller Teilschaufeln h im Bereich des Abstandes der Eintrittskante der ersten Teilschaufeln vom Aussenradius der Abströmkanten der Laufschaufeln (r₁-r) von rund 50 bis 85 vom Hundert des Abstandes der Eintrittskante der zweiten Teilschaufeln vom Aussenradius der Abströmkanten der Laufschaufeln (r₂-r) der Lärm reduziert werden kann.

Das berechnete absolute Minimum der Lärmentwicklung liegt bei einer Höhe der ersten Teilschaufel h₁ von rund 38 bis 42 (der für die Berechnung eingesetzte Wert lag bei 40) vom Hundert der Summe der Höhen aller Teilschaufeln h im Bereich des Abstandes der Eintrittskante der ersten Teilschaufeln vom Aussenradius der Abströmkanten der Laufschaufeln (r₁-r) von rund 55 bis 60 vom Hundert des Abstandes der Eintrittskante der zweiten Teilschaufeln vom Aussenradius der Abströmkanten der Laufschaufeln (r₂-r). Dabei ist zu beachten, dass bei ändernden Verdichtergeometrien, beispielsweise unterschiedlicher Schaufelanzahl oder unterschiedlichem spezifischem Schluckvermögen, diese Werte gewisse Abweichungen erfahren dürften. Der optimale Bereich dürfte somit, in Abhängigkeit der genauen Geometrie des Verdichters um die oben genannten Werte liegen.

Die berechneten Werte konnten experimentell bestätigt werden.

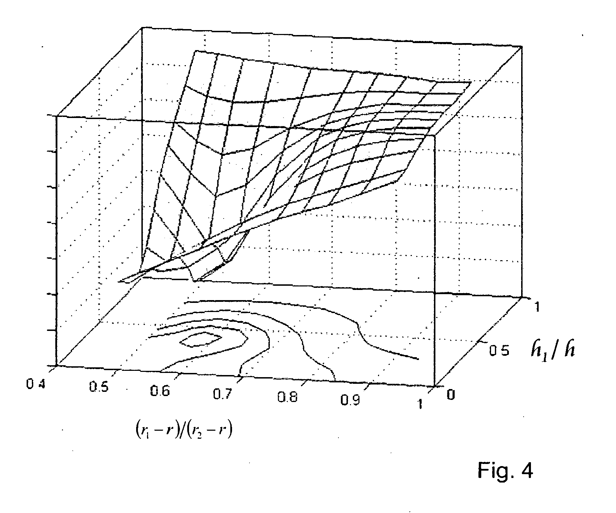

Die Kurvenschar des Diagramms von Fig. 3 ist in der Fig. 4 in dreidimensionaler Darstellung noch einmal wiedergegeben. Kurven mit konstanten Lärmwerten sind auf die Bodenfläche projiziert. Dabei zeigt sich wiederum, dass das Optimum in dem oben beschriebenen Bereich zu liegen kommt.

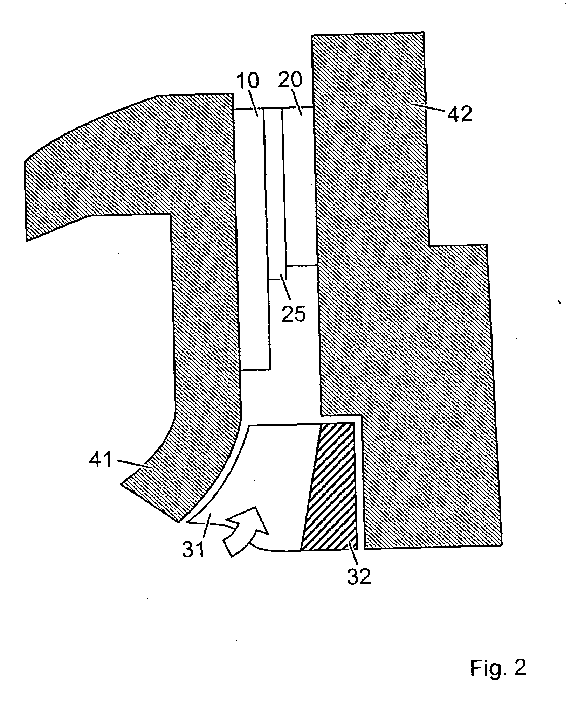

Fig. 2 zeigt eine zweite Ausführungsform der erfindungsgemässen Leitvorrichtung. Zwischen der ersten Teilschaufel 10 und der verkürzten, zweiten Teilschaufel 20, ist eine dritte Teilschaufel 25 angeordnet. Diese dritte Teilschaufel hat eine Schaufelprofillänge welche zwischen den Schaufelprofillängen der ersten und der zweiten Teilschaufeln liegt. Erfindungsgemäss können weitere Stufen durch weitere Teilschaufeln realisiert werden. Die Leitschaufeln erhalten durch zusätzliche Teilschaufeln eine feinere meridionale Abstufung, womit sich die Leitvorrichtung insgesamt besser an die Strömungsstruktur entlang der Höhe des Diffusorkanals anpassen lässt.

Die erste und zweite Teilschaufel und allfällige weiteren Teilschaufeln weisen in einer Ausführungsform der Erfindung eine gemeinsame Austrittskante auf. Diese verläuft quer über die gesamte Höhe des Diffursorkanals.

Die Laufschaufeln der Leitvorrichtung weisen aerodynamische, gerade oder kurvenförmige Schaufelprofile auf.

In einer Ausführungsform der Erfindung verlaufen die Schaufelprofile einer kürzeren Teilschaufel jeweils vollumfänglich innerhalb des Schaufelprofils der nächst grösseren Teilschaufel.

In einer Ausführungsform der Erfindung entspricht das Schaufelprofil einer jeweils kürzeren Teilschaufel dem mit einem Verkleinerungsfaktor kleiner als 1 skalierten Schaufelprofil einer jeweils längeren Teilschaufel.

Bei der Herstellung der geteilten Leitschaufel wird in einem ersten Arbeitsschritt die Leitschaufel mit der Höhe des Diffusorkanals gefertigt. Diese Leitschaufel hat bereits das Schaufelprofil der eintrittsseitigen, ersten Teilschaufel. Anschliessend werden die kürzeren Teilschaufeln aus dem Schaufelprofil der ursprünglichen Leitschaufel gefräst. In sich wiederholenden Durchgängen können so mehrere Teilschaufeln erzeugt werden, jeweils eine kürzere aus dem Schaufelprofil der nächst grösseren. Dabei kommt der Herstellung erleichternd zugute, dass erfindungsgemäss die Schaufeleintrittskanten stufenförmig ausgebildet sind.

Die meridional gestuft angeordneten Eintrittskanten der beiden Teilschaufeln der Leitvorrichtung führen zu einer Abschwächung der Druckpulsation, welche von der Strömung am Austritt des Verdichterrades erzeugt wird. Diese Abschwächung der Druckpulsation hat wiederum einen positiven Einfluss auf die Anregung der Schwingung der Laufschaufeln des Verdichterrades, was sich insbesondere bei einer Reduktion der Laufschaufeldicke positiv auswirkt, da dadurch die Belastung der Laufschaufeln deutlich reduziert werden kann. Andererseits erlaubt diese Abschwächung der Druckpulsation und die damit verbundene, weniger starke Anregung, einen höheren Volumenstrom bei gleich bleibender Abmessung von Verdichter und Diffusor. Der höhere Volumenstrom führt dank den meridional gestuften Eintrittskanten der Leitschaufeln des Diffusors zu keiner unzulässigen Erhöhung der Anregung der Laufschaufeln des Verdichterrades.

### Bezugszeichenliste

- 10: Erste Teilschaufel (eintrittsseitig)
- 11: Eintrittskante der ersten Teilschaufel
- 20: Zweite Teilschaufel (nabenseitig)
- 21: Eintrittskante der zweiten Teilschaufel
- 25: Dritte Teilschaufel
- 31: Laufschaufeln des Verdichterrades
- 32: Nabe des Verdichterrades
- 33: Abströmkante der Laufschaufeln des Verdichterrades
- 41: Eintrittsseitiges Gehäuse
- 42: Nabenseitiges Gehäuse
- l₁: Schaufelprofillänge der ersten Teilschaufel
- l₂: Schaufelprofillänge der zweiten Teilschaufel
- h₁: Schaufelhöhe der ersten Teilschaufel
- h: Gesamthöhe der ersten und zweiten Teilschaufeln
- r: Aussenradius des Verdichterrades an der Abströmkante der Laufschaufeln
- r₁: Innenradius der Eintrittskante der ersten Teilschaufel
- r₂: Innenradius der Eintrittskante der zweiten Teilschaufel

## Patentansprüche

1. Leitvorrichtung für den Diffusor am Verdichterradaustritt eines Radialverdichters, umfassend eine Vielzahl von Leitschaufeln, wobei die Leitschaufeln zwischen einem eintrittsseitigen Gehäuseteil (41) und einem nabenseitigen Gehäuseteil (42) angeordnet sind,
jede Leitschaufel in eine erste, eintrittsseitige Teilschaufel (10) und mindestens eine weitere, zweite, nabenseitige Teilschaufel (20) aufgeteilt ist, und
die Schaufelprofillänge (l₁) der erste Teilschaufel (10) grösser ist als die Schaufelprofillänge (l₂) der zweiten Teilschaufel (20), wobei sich die erste Teilschaufel (10) in der Höhe (h₁) über 30 bis 70 vom Hundert der Summe der Höhen aller Teilschaufeln (h) entlang einer Schaufeleintrittskante (11, 21) erstreckt, so dass im Betrieb dieser Leitvorrichtung in einem Radialverdichter ein erster Teil der Abströmung des Verdichterrades über die erste Teilschaufel (10) und ein mit einer stärker ausgeprägten Radialkomponente strömender, zweiter Teil der Strömung über die kürzere, mit zurückversetzter Schaufeleintrittskante (21) ausgebildete, zweite Teilschaufel (20) geführt werden kann,
**dadurch gekennzeichnet, dass**
der Abstand (r₁-r) der Eintrittskante (11) der ersten Teilschaufel (10) vom Aussenradius (r) der Abströmkanten (33) der Laufschaufeln 50 bis 85 vom Hundert des Abstandes (r₂-r) der Eintrittskante (12) der zweiten Teilschaufeln (20) vom Aussenradius (r) der Abströmkanten (33) der Laufschaufeln beträgt.

2. Leitvorrichtung nach Anspruch 1, **dadurch gekennzeichnet, dass** die erste Teilschaufel (10) an einer Schaufeleintrittskante (11) einen Innendurchmesser (r₁) aufweist, welcher 110 bis 125 vom Hundert des Aussendurchmessers (r) des Verdichterradaustritts beträgt.

3. Leitvorrichtung nach Anspruch 1, **dadurch gekennzeichnet, dass** zwischen der ersten Teilschaufel (10) und der zweiten Teilschaufel (20) mindestens eine, dritte Teilschaufel (25) angeordnet ist, wobei sich die dritte Teilschaufel über eine Länge erstreckt, welche zwischen der Schaufelprofillänge der ersten und der Schaufelprofillänge der zweiten Teilschaufel liegt.

4. Leitvorrichtung für den Diffusor eines Radialverdichters nach einem der Ansprüche 1 bis 3, **dadurch gekennzeichnet, dass** die Abströmkanten der Teilschaufeln gemeinsam eine durchgehende Abströmkante der Leitschaufel bilden.

5. Leitvorrichtung für den Diffusor eines Radialverdichters nach einem der Ansprüche 1 bis 3, **dadurch gekennzeichnet, dass** das Schaufelprofil einer jeweils kürzeren Teilschaufel vollständig innerhalb des Schaufelprofils einer jeweils längeren Teilschaufelliegt.

6. Leitvorrichtung für den Diffusor eines Radialverdichters nach einem der Ansprüche 1 bis 3, **dadurch gekennzeichnet, dass** das Schaufelprofil einer jeweils kürzeren Teilschaufel dem mit einem Verkleinerungsfaktor skalierten Schaufelprofil einer jeweils längeren Teilschaufel entspricht.

7. Abgasturbolader, **gekennzeichnet durch** einen Radialverdichter mit einer Leitvorrichtung nach einem der Ansprüche 1 bis 6.

## Claims

1. Guide device for the diffuser at the compressor-wheel outlet of a radial compressor, comprising a multiplicity of guide vanes, the guide vanes being arranged between an inlet-side casing part (41) and a hub-side casing part (42), each guide vane being divided into a first, inlet-side part-vane (10) and at least one further second, hub-side part-vane (20), and the vane-profile length (l₁) of the first part-vane (10) being greater than the vane-profile length (l₂) of the second part-vane (20), the first part-vane (10) extending in height (h₁) over 30 to 70 percent of the sum of the heights (h) of all the part-vanes along a vane inlet edge (11, 21), so that, when this guide device is in operation in a radial compressor, a first part of the outflow of the compressor wheel can be routed via the first part-vane (10) and a second part of the flow, which flows with a more pronounced radial component, can be routed via the shorter second part-vane (20) designed with a set-back vane inlet edge (21), **characterized in that** the distance (r₁-r) of the inlet edge (11) of the first part-vane (10) from the outer radius (r) of the outflow edges (33) of the moving blades amounts to 50 to 85 percent of the distance (r₂-r) of the inlet edge (12) of the second part-vanes (20) from the outer radius (r) of the outflow edges (33) of the moving blades.

2. Guide device according to Claim 1, **characterized in that** the first part-vane (10) has at a vane inlet edge (11) an inside diameter (r₁) which amounts to 110 to 125 percent of the outside diameter (r) of the compressor-wheel outlet.

3. Guide device according to Claim 1, **characterized in that** at least one third part-vane (25) is arranged between the first part-vane (10) and the second part-vane (20), the third part-vane extending over a length which lies between the vane-profile length of the first part-vane and the vane-profile length of the second part-vane.

4. Guide device for the diffuser of a radial compressor according to one of Claims 1 to 3,
**characterized in that** the outflow edges of the part-vanes together form a continuous outflow edge of the guide vane.

5. Guide device for the diffuser of a radial compressor according to one of Claims 1 to 3,
**characterized in that** the vane profile of a respectively shorter part-vane lies completely within the vane profile of a respectively longer part-vane.

6. Guide device for the diffuser of a radial compressor according to one of Claims 1 to 3,
**characterized in that** the vane profile of a respectively shorter part-vane corresponds to a vane profile, scaled by means of a reduction ratio, of a respectively longer part-vane.

7. Exhaust-gas turbocharger, **characterized by** a radial compressor having a guide device according to one of Claims 1 to 6.

## Revendications

1. Dispositif de guidage pour un diffuseur à la sortie de la roue de compresseur d'un compresseur radial, comprenant une pluralité d'aubes directrices, les aubes directrices étant disposées entre une partie de boîtier (41) du côté de l'entrée et une partie de boîtier (42) du côté du moyeu,
chaque aube directrice étant divisée en une première aube partielle du côté de l'entrée (10) et au moins une autre, deuxième, aube partielle du côté du moyeu (20), et
la longueur du profil d'aube (l₁) de la première aube partielle (10) étant supérieure à la longueur du profil d'aube (l₂) de la deuxième aube partielle (20), la première aube partielle (10) s'étendant à la hauteur (h₁) sur 30 à 70 pour cent de la somme des hauteurs de toutes les aubes partielles (h) le long d'une arête d'entrée d'aube (11, 21), de sorte que pendant le fonctionnement de ce dispositif de guidage dans un compresseur radial, une première partie de l'écoulement de la roue du compresseur puisse être guidée par le biais de la première aube partielle (10) et qu'une deuxième partie de l'écoulement s'écoulant avec une composante radiale plus fortement marquée, puisse être guidée par le biais de la deuxième aube partielle plus courte (20) réalisée avec une arête d'entrée d'aube (21) décalée vers l'arrière,
**caractérisé en ce que**
la distance (r₁-r) de l'arête d'entrée (11) de la première aube partielle (10) au rayon extérieur (r) des arêtes d'écoulement (33) des aubes mobiles vaut 50 à 85 pour cent de la distance (r₂-r) de l'arête d'entrée (12) des deuxième aubes partielles (20) au rayon extérieur (r) des arêtes d'écoulement (33) des aubes mobiles.

2. Dispositif de guidage selon la revendication 1, **caractérisé en ce que** la première aube partielle (10) présente au niveau d'une arête d'entrée d'aube (11) un diamètre intérieur (r₁) qui vaut 110 à 125 pour cent du diamètre extérieur (r) de la sortie de la roue du compresseur.

3. Dispositif de guidage selon la revendication 1, **caractérisé en ce qu'**entre la première aube partielle (10) et la deuxième aube partielle (20) est disposée au moins une troisième aube partielle (25), la troisième aube partielle s'étendant sur une longueur qui est située entre la longueur du profil d'aube de la première aube partielle et la longueur du profil d'aube de la deuxième aube partielle.

4. Dispositif de guidage pour un diffuseur d'un compresseur radial selon l'une quelconque des revendications 1 à 3, **caractérisé en ce que** les arêtes d'écoulement des aubes partielles forment ensemble une arête d'écoulement continue de l'aube directrice.

5. Dispositif de guidage pour un diffuseur d'un compresseur radial selon l'une quelconque des revendications 1 à 3, **caractérisé en ce que** le profil d'aube d'une aube partielle plus courte respective se situe complètement à l'intérieur du profil d'aube d'une aube partielle plus longue respective.

6. Dispositif de guidage pour un diffuseur d'un compresseur radial selon l'une quelconque des revendications 1 à 3, **caractérisé en ce que** le profil d'aube d'une aube partielle plus courte respective correspond au profil d'aube mis à l'échelle avec un facteur de réduction d'une aube partielle plus longue respective.

7. Turbosoufflante à gaz d'échappement, **caractérisée par** un compresseur radial ayant un dispositif de guidage selon l'une quelconque des revendications 1 à 6.
